Europäisches Patentamt

European Patent Office

Office européen des brevets

(19)

(11) Veröffentlichungsnummer: **0 076 894**
**A1**

(12) # EUROPÄISCHE PATENTANMELDUNG

(21) Anmeldenummer: 82106435.9

(22) Anmeldetag: 16.07.82

(51) Int. Cl.³: **C 04 B 7/44**, F 27 B 7/20

(30) Priorität: 13.10.81 DE 3140690

(43) Veröffentlichungstag der Anmeldung: 20.04.83
Patentblatt 83/16

(84) Benannte Vertragsstaaten: BE CH DE FR GB IT LI

(71) Anmelder: **Krupp Polysius AG, Graf-Galen-Strasse 17,
D-4720 Beckum (DE)**

(72) Erfinder: **Heinemann, Otto, Ing. grad., Galileistrasse 8,
D-4722 Ennigerloh (DE)**
Erfinder: **Baldus, Heinz-Dieter, Ing. grad., Am
Webstuhl 8, D-4730 Ahlen (DE)**
Erfinder: **Schmits, Heinz-Herbert, Ing. grad., Berliner
Strasse 6a, D-4840 Rheda-Wiedenbrück (DE)**

(74) Vertreter: **Tetzner, Volkmar, Dr.-Ing. Dr. Jur.,
Van-Gogh-Strasse 3, D-8000 München 71 (DE)**

(54) Verfahren und Anlage zur Wärmebehandlung von feinkörnigem Gut.

(57) Die Erfindung betrifft ein Verfahren sowie eine Anlage zur Wärmebehandlung von feinkörnigem Gut, wobei das Abgas der Brennzone, die Abluft der Kühlzone (14, 14a, 14b,) und die vereinigten Teilströme des Gutes einer einzigen Erhitzungszone zugeführt werden, deren Abgas auf die beiden Stränge (13a, 13b) der Vorwärmzone aufgeteilt wird. Dadurch ergibt sich bei niedriger Bauhöhe eine einfache Leitungsführung für Gut und Gas. Es genügt ferner eine einzige Erhitzungseinrichtung (15, 15') (Vorcalciniereinrichtung) mit guter Verteilung der Kühlerabluft und der Möglichkeit eines einfachen By-pass-Anschlusses.

EP 0 076 894 A1

0076894

P 5070

## Verfahren und Anlage zur Wärmebehandlung von feinkörnigem Gut

Die Erfindung betrifft ein Verfahren sowie eine Anlage zur Wärmebehandlung von feinkörnigem Gut, das zunächst in zwei Teilströmen in einer zweisträngigen Vorwärmzone mittels heißer Gase vorgewärmt, dann durch zusätzlichen Brennstoff weiter erhitzt, in einer Brennzone fertiggebrannt und in einer Kühlzone gekühlt wird, wobei die Vorwärmung des Gutes unter Verwendung von Abgas der Brennzone und Abluft der Kühlzone erfolgt.

Verfahren der vorstehend genannten Art dienen insbesondere zum Brennen von Zementrohmaterial. Durch die weitere Erhitzung des bereits vorgewärmten Rohmateriales mittels zusätzlichen Brennstoffes soll das Gut vor Einführung in die Brennzone (in der Regel ein Drehrohrofen) möglichst weitgehend entsäuert ("vorcalciniert") werden, um die Brennzone von der stark endothermen Entsäuerungsarbeit möglichst zu entlasten und dadurch kleiner dimensionieren zu können.

Zur weiteren Leistungssteigerung derartiger Anlagen ist es bekannt, der Brennzone (Drehrohrofen) eine zweisträngige Vorwärmzone vorzuschalten, wobei die beiden Stränge bezüglich der Gutführung im wesentlichen parallel geschaltet sind. Je nach der Gasführung und den zur weiteren Erhitzung (Vorcalcination) des vorgewärmten Gutes getroffenen Maßnahmen lassen sich im wesentlichen zwei Grundtypen der bekannten Ausführungen unterscheiden.

Bei der einen bekannten Variante werden sowohl das Abgas der Brennzone (Drehrohrofenabgas), als auch die Abluft der Kühlzone auf die beiden Stränge der Vorwärmzone aufgeteilt (vgl. DE-OS 27 24 654 und 27 51 876). Beide Stränge der Vorwärmzone sind hierbei mit einer oder mehreren Stellen zur Zuführung von zusätzlichem Brennstoff versehen.

Diese Verfahren und Anlagen sind jedoch mit dem Nachteil behaftet, daß sich große konstruktive Schwierigkeiten in der Leitungsanordnung für Gas und Gut ergeben und eine unerwünscht große Bauhöhe erforderlich ist. Diese Schwierigkeiten erklären sich im wesentlichen durch den Umstand, daß einerseits die Brennstoffzuführungen zum Zwecke der Vorcalcination möglichst weit unten im Vorwärmer (nahe dem Drehrohrofen) angeordnet werden sollen, um eine optimale Ausnutzung der Brennstoffwärme zu erzielen, daß andererseits jedoch die Aufteilung der Ofenabgase auf die beiden Vorwärmstränge eine gewisse Bauhöhe erfordert.

Sieht man andererseits gesonderte Brenner einerseits in der zu den beiden Vorwärmsträngen gehörenden geteilten Ofenabgasleitung vor und andererseits an einer höher liegenden Stelle der beiden Vorwärmstränge,an der die Kühlerabluftleitungen einmünden, so ergibt sich durch die Verdopplung der Vorcalcinierbrenner eine wesentliche Erhöhung des Aufwandes. Nachteilig ist dabei auch, daß die mit Kühlerabluft versorgten Vorcalcinierbrenner ihre Wärmeenergie in der zweituntersten (vorletzten) Stufe der Vorwärmstränge an das Gut abgeben müssen, was wärmetechnisch ungünstig im Vergleich zu einer Wärmeübertragung in der letzten Vorwärmstufe ist.

Ein weiterer Nachteil der Verfahren und Anlagen gemäß dieser ersten Variante besteht schließlich darin, daß im allgemeinen kein Platz für einen aus Gründen hoher Schadstoffkonzentration im Rohmaterial etwa benötigten By-pass der Ofenabgase vorhanden ist.

Bei einer zweiten Variante bekannter Verfahren und Anlagen wird dem einen der beiden Vorwärmstränge Abgas der Brennzone (d.h. des Drehrohrofens) und dem anderen Vorwärmstrang Abluft der Kühlzone zugeführt (vgl. DE-OS 26 03 594, 26 18 489, 27 00 710 und 29 23 419). Dabei ist im allgemeinen in beiden Vorwärmsträngen eine zusätzliche Brennzone zur Vorcalcination des Rohmateriales vorgesehen (vgl. etwa DE-OS 26 03 594). Es ist jedoch auch bekannt, die zur Vorcalcination des Gutes dienende Einrichtung ausschließlich mit Abluft der Kühlzone zu versorgen und das vorgewärmte Gut beider Vorwärmstränge dieser Calciniereinrichtung zuzuführen (vgl. DE-OS 27 00 710).

Auch bei diesen bekannten Verfahren und Anlagen bereitet die Leitungsanordnung für Gas und Gut große konstruktive Schwierigkeiten, insbesondere dann, wenn die Calciniereinrichtung aus wärmetechnischen Gründen möglichst nahe an der Brennzone (d.h. am Drehrohrofen) vorgesehen werden soll.
Ein weiterer Nachteil besteht darin, daß bei einem
Stromausfall und einem dadurch bedingten Wegfall
des Saugzuges das Gut des mit Kühlerabluft versorgten Vorwärmstranges in die vom Kühler kommende Luftleitung fällt und erhebliche Betriebsstörungen verursacht. Aus Platzgründen ist es bei derartigen Anlagen kaum möglich, die Anordnung so zu gestalten,
daß durchfallendes Rohmehl über einen Trichter unmittelbar in den Drehrohrofen gelangt.

Ein weiterer wesentlicher Nachteil der Verfahren
und Anlagen entsprechend dieser zweiten Variante
liegt ferner darin, daß die in den Ofenabgasen vorhandenen Schadstoffe nur mit der halben Rohmehlmenge
in Berührung kommen und dadurch zu einer hohen
Schadstoffkonzentration und allen dadurch bedingten
Schwierigkeiten (insbesondere Anbackungen in den
Leitungen) führen können. Um die durch hohe Schadstoffkonzentrationen bedingten Gefahren zu vermeiden, müssen größere Teilmengen der Ofenabgase im
By-pass abgeführt werden, was einen wärmetechnischen
Verlust darstellt.

Der Erfindung liegt daher die Aufgabe zugrunde,
unter Vermeidung der Mängel der bekannten Ausführungen ein Verfahren der eingangs genannten Art so auszubilden, daß sich bei niedriger Bauhöhe eine einfache Gut- und Gasführung ergibt, eine einfache
Möglichkeit eines By-pass-Anschlusses besteht und
für jeden der beiden Vorwärmstränge nur ein Vorcal-

0076894

cinierbrenner notwendig ist.

Diese Aufgabe wird erfindungsgemäß dadurch gelöst, daß das Abgas der Brennzone, die Abluft der Kühlzone und die vereinigten Teilströme des Gutes einer einzigen Erhitzungszone zugeführt werden, deren Abgas auf die beiden Stränge der Vorwärmzone aufgeteilt wird.

Das erfindungsgemäße Verfahren eignet sich insbesondere in Fällen, in denen eine ursprünglich mit einem einzigen Vorwärmstrang ausgerüstete Anlage nachträglich zum Zwecke der Leistungssteigerung mit einem zweiten Vorwärmstrang versehen werden soll. Grundsätzlich ist jedoch das erfindungsgemäße Verfahren auch für Neuanlagen vorteilhaft einsetzbar.

Indem das gesamte Abgas der Brennzone (im folgenden kurz "Ofenabgas" bezeichnet) der einzigen Erhitzungszone (im folgenden "Vorcalcinierzone" bezeichnet) zugeführt wird, kann diese Vorcalcinierzone in unmittelbarer Nähe des Ofens angeordnet werden, was einerseits die Bauhöhe der Anlage verringert und andererseits wärmetechnisch das Optimum darstellt. Durch die Verwendung einer einzigen Vorcalcinierzone wird der hierfür erforderliche Mehraufwand gering gehalten. Es werden ferner die Probleme vermieden, die bei bekannten Verfahren und Anlagen mit der Aufteilung des Gutstromes auf mehrere Vorcalcinierzonen verbunden sind.

Das Einführen der Abluft der Kühlzone (im folgenden auch als "Tertiärluft" bezeichnet) in die einzige Vorcalcinierzone bereitet verfahrenstechnisch und konstruktiv keine Schwierigkeiten. Zweckmäßig wird die Abluft der Kühlzone in zwei Teilströme aufgeteilt und das Gut beider Stränge der Vorwärmzone in diese Abluft der Kühlzone eingeführt, unmittelbar ehe sich diese Luft mit dem Abgas der Brennzone (Ofenabgas) vereinigt.

Bei der erfindungsgemäßen Lösung bereitet die Anbringung eines etwa erforderlichen By-pass-Anschlusses keine Schwierigkeiten. Da ferner die Ofenabgase mit der Gesamtmenge des vorzuwärmenden Gutes in Berührung kommen, sind zur Begrenzung der auftretenden Schadstoffkonzentrationen geringere By-pass-Mengen als bei den oben geschilderten bekannten Lösungen erforderlich.

Diese und zahlreiche weitere Merkmale der Erfindung sind Gegenstand der Unteransprüche und werden im Zusammenhang mit der Erläuterung eines in der Zeichnung veranschaulichten Ausführungsbeispieles beschrieben.

In der Zeichnung zeigen

Fig.1  eine schematische Gesamtdarstellung einer Anlage zur Durchführung des erfindungsgemäßen Verfahrens;

Fig.2 und 3   je eine Teilansicht (um 90° gegeneinander gedreht) des die Vorcalcinierzone enthaltenden unteren Bereiches der beiden Vorwärmstränge.

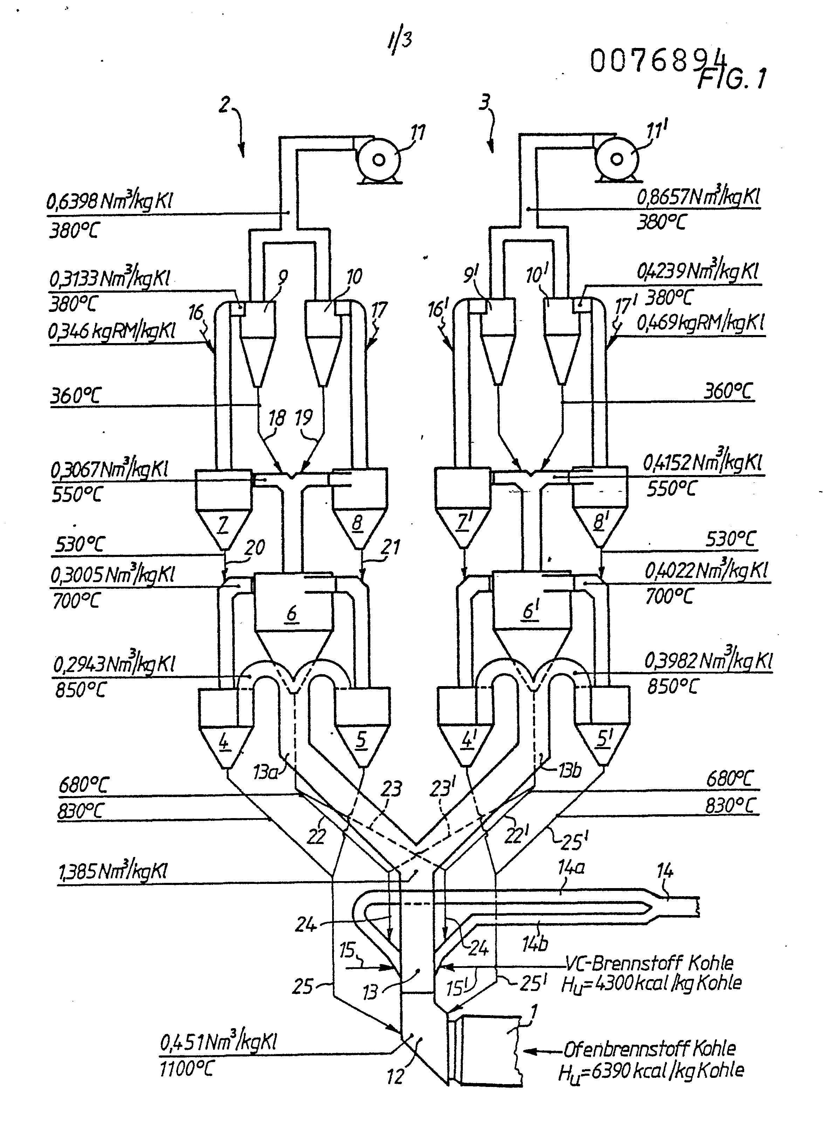

Die in Fig.1 dargestellte Anlage enthält einen (nur teilweise dargestellten) Drehrohrofen 1, dem zwei Vorwärmstränge 2 und 3 vorgeschaltet sind. Dabei sei angenommen, daß der Vorwärmstrang 2 zur ursprünglichen Anlage gehört und der Vorwärmstrang 3 zum Zwecke der Leistungssteigerung hinzugefügt wurde.

Der Vorwärmstrang 2 enthält in der untersten Stufe zwei Zyklone 4, 5, in der folgenden Stufe eine Wirbelkammer 6, in der nächsten Stufe zwei Zyklone 7, 8 und in der obersten Stufe zwei Zyklone 9, 10.

Der Vorwärmstrang 3 ist gleichartig aufgebaut. Die entsprechenden Elemente sind mit 4' bis 10' bezeichnet. Den beiden Vorwärmsträngen 2, 3 ist je ein gesondertes Abgasgebläse 11, 11' zugeordnet.

An das Einlaufgehäuse 12 des Drehrohrofens 1 schließt sich eine Ofenabgasleitung 13 an, die sich weiter oben in eine Leitung 13a und 13b aufteilt.

Vom (nicht dargestellten) Kühler kommt eine Leitung 14, die sich in zwei Leitungen 14a, 14b aufteilt, die in den unteren Teil der Ofenabgasleitung 13, dicht oberhalb des Einlaufgehäuses 12, einmünden. In diesen Leitungen 14a, 14b sind nahe der genannten Einmündung in die Ofenabgasleitung 13 Brenner 15, 15' vorgesehen.

Der Strömungsweg der Gase ist wie folgt: Die Abgase des Drehrohrofens 1 strömen durch die Ofenabgasleitung 13, die zusammen mit den anschließenden Leitungen 13a und 13b die Vorcalcinierzone bildet. In der Ofenabgasleitung 13 vermischen sich die Ofenabgase mit der über die Leitungen 14a, 14b zugeführten Abluft des Kühlers. In der von den Leitungen 13, 13a und 13b gebildeten Vorcalcinierzone wird der über die Brenner 15, 15' zugeführte Brennstoff verbrannt. Je ein Teil der Abgase strömt dann über die Leitungen 13a bzw. 13b dem Vorwärmstrang 2 bzw. 3 zu. Der über die Leitung 13a strömende Gasstrom teilt sich in bekannter Weise auf die Zyklone 4 und 5 auf. Diese Teilströme vereinigen sich dann in der Wirbelkammer 6. Nach erneuter Aufteilung gelangt der Gasstrom über die Zyklone 7 bzw. 8 und 9 bzw. 10 zum Abgasgebläse 11. In entsprechender Weise verläuft im Vorwärmstrang 3 der über die Leitung 13b zugeführte Gasstrom.

Die Bewegung des Gutes ist wie folgt: Es wird in vier Teilmengen an den mit 16, 17 und 16', 17' bezeichneten Stellen in die zu den obersten Zyklonen 9, 10 bzw. 9', 10' führenden Gasleitungen eingeführt. Im Vorwärmstrang 2 gelangen die in den Zyklonen 9, 10 abgeschiedenen Gutströme über Gutleitungen 18, 19 in die zu den Zyklonen 7, 8 führenden Gasleitungen. Nach Abscheidung in den Zyklonen 7 und 8 gelangt das Gut im Vorwärmstrang 2 über Gutleitungen 20, 21 in die zur Wirbelkammer 6 führen-

0076894

den Gasleitungen. In entsprechender Weise erfolgt die Gutbewegung im Vorwärmstrang 3.

Das in der Wirbelkammer 6 abgeschiedene Gut wird auf zwei Gutleitungen 22, 23 aufgeteilt. In entsprechender Weise gelangt das Gut aus der Wirbelkammer 6' in zwei Gutleitungen 22', 23'. Die Gutleitungen 22 und 23' sind zusammengeführt und münden über eine Gutleitung 24 in die die Kühlerabluft führende Leitung 14a. In entsprechender Weise sind die Gutleitungen 22' und 23 zusammengeführt, wobei die Gutleitung 24' in die Leitung 14b einmündet.

Das auf diese Weise in die Ofenabgasleitung 13 eingebrachte Gut wird durch den Gasstrom über die Leitungen 13a, 13b den Zyklonen 4, 5 bzw. 4', 5' zugeleitet. Nach Abscheidung in diesen Zyklonen gelangt das Gut über Gutleitungen 25, 25' in das Einlaufgehäuse 12 und von hier aus in den Drehrohrofen 1.

Wie sich aus der vorstehenden Beschreibung ergibt, werden bei der zur Durchführung des erfindungsgemäßen Verfahrens dienenden Anlage das Abgas der Brennzone (d.h. des Drehrohrofens 1), die Abluft der Kühlzone und die vereinigten Teilströme des Gutes einer einzigen Erhitzungszone (nämlich der von den Leitungen 13, 13a und 13b gebildeten Vorcalcinierzone) zugeführt, deren Abgas auf die beiden Vorwärmstränge 2, 3 aufgeteilt wird.

0076894

Dabei wird die Abluft der Kühlzone in zwei Teilströme aufgeteilt (Leitungen 14a, 14b) und das Gut beider Vorwärmstränge 2, 3 in diese Abluft der Kühlzone eingeführt (Leitungen 24, 24'), unmittelbar ehe sich diese Luft mit dem Ofenabgas in der Ofenabgasleitung 13 vereinigt.

Der über die Brenner 15, 15' zugeführte zusätzliche Brennstoff wird gleichfalls in die Abluft der Kühlzone (Leitungen 14a, 14b) eingeführt, unmittelbar ehe sich diese Abluft mit dem Ofenabgas vereinigt.

Bezeichnet man die Gutmengen, die jeden der beiden Vorwärmstränge 2 bzw. 3 durchsetzen, als "Teilströme" und die durch Aufteilung eines solchen Teilstromes entstehenden Mengen als "Unterteilströme", so zeigt ferner Fig.1, daß jeweils der eine Unterteilstrom (z.B. der in Gutleitung 22) des aus der zweituntersten Stufe (z.B. Wirbelkammer 6) des einen Vorwärmstranges (z.B. 2) ausgetragenen Gutes mit einem Unterteilstrom (z.B. dem in Gutleitung 23') des aus der zweituntersten Stufe (z.B. Wirbelkammer 6') des anderen Vorwärmstranges (z.B. 3) ausgetragenen Gutes vereinigt wird, ehe dieses Gut (nunmehr in Gutleitung 24) in einen der beiden Teilströme (Leitung 14a) der Abluft der Kühlzone eingeführt wird.

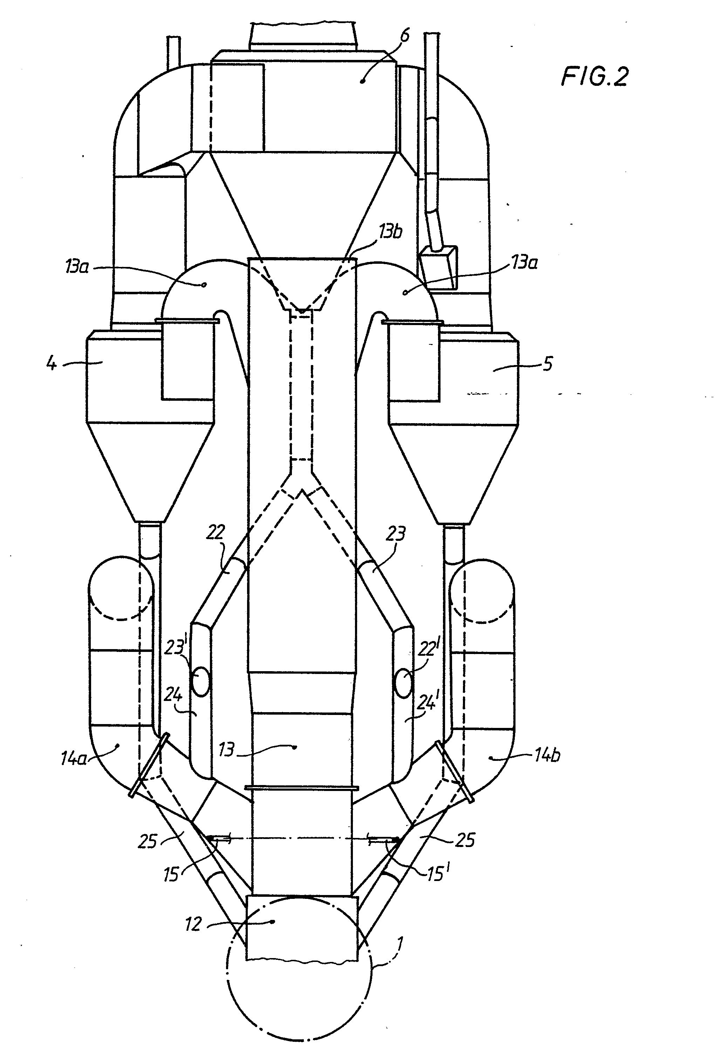

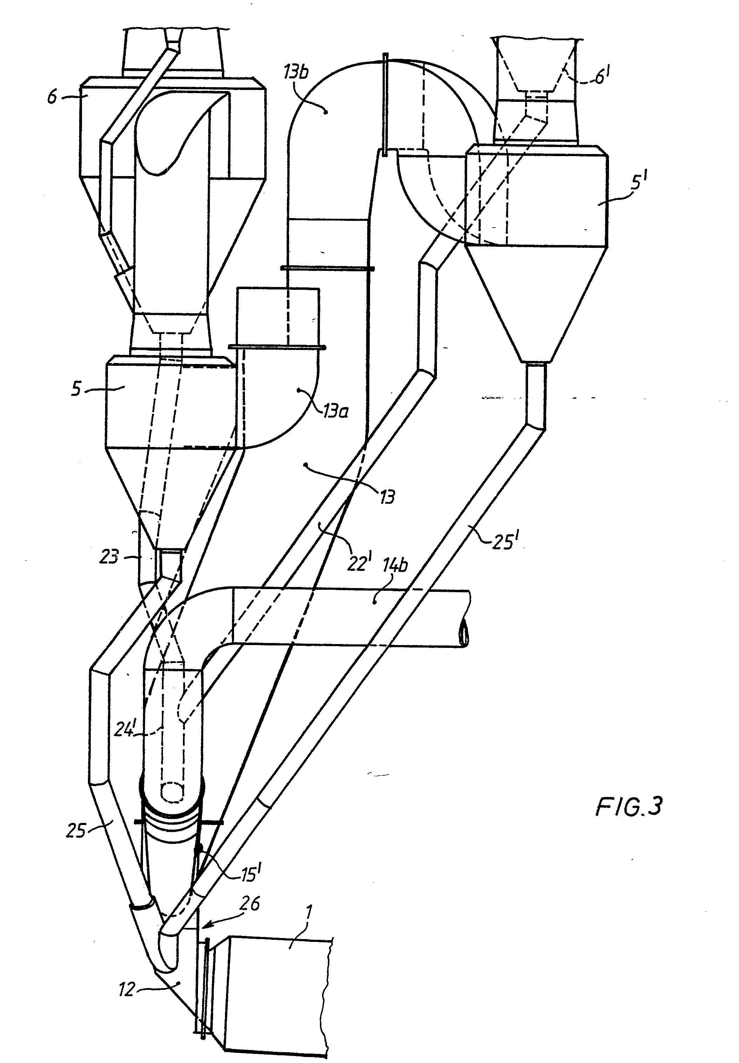

In den Fig.2 und 3 ist der für die Erfindung wesentliche untere Teil der beiden Vorwärmstränge in einer Darstellung veranschaulicht, die die Anordnung unter Berücksichtigung der in der Praxis

- 11-

gegebenen räumlichen Verhältnisse veranschaulicht. Für die gleichen Bauteile sind dabei dieselben Bezugszeichen wie in Fig.1 verwendet.

Man erkennt insbesondere aus Fig.3, daß die Ofenabgasleitung 13 dicht über dem Ofeneinlaufgehäuse 12 ihren engsten Querschnitt aufweist. Dieser engste Querschnitt liegt unterhalb der Einmündung der beiden die Abluft des Kühlers führenden Leitungen 14a, 14b. Durch die Querschnittsverengung soll ein Durchschießen des Gutes in das Einlaufgehäuse verhindert und eine sichere Umlenkung des Gutes durch den aufsteigenden Gasstrom gewährleistet werden.

Wie Fig.2 erkennen läßt, sind die in den die Abluft des Kühlers führenden Leitungen 14a, 14b angeordneten Brenner 15, 15' dicht vor der Einmündung dieser Leitungen in die Ofenabgasleitung 13 angeordnet, und zwar etwa unterhalb der Einmündung der Gutleitungen 24, 24'. Dadurch wird eine gute Vermischung von Brennstoff und Gut beim Eintrag in die Vorcalcinierzone erreicht.

Die erwähnten Leitungen 14a, 14b sind im Bereich der Einmündung unter einem Winkel von 20 bis 50°, vorzugsweise von 30 bis 40°, gegenüber der Horizontalen geneigt.

Wie sich aus Fig.3 entnehmen läßt, verläuft die Ofenabgasleitung 13 von der Einmündung der Kühlerabluft-Leitungen 14a, 14b zunächst unter einem Winkel von 20 bis 30° gegenüber der Vertikalen geneigt (in Fig.3 nach rechts geneigt), ehe sie in einen vertikalen Verlauf übergeht. Die Zyklone 4, 5 der untersten Stufe des Vorwärmstranges 3 sind seitlich (über die Leitung 13a) an den vertikal verlaufenden Teil der Ofenabgasleitung 13 angeschlossen. Die Zyklone 4', 5' der untersten Stufe des Vorwärmstranges 3 sind dagegen etwas höher angeordnet und befinden sich auf der Seite des Drehrohrofens 1. Diese Anordnung ermöglicht bei nachträglicher Installation des Vorwärmstranges 3 eine optimale Ausnutzung des zur Verfügung stehenden Raumes bei einfachster Leitungsführung für Gas und Gut.

Soll ein By-pass-Anschluß an der Ofenabgasleitung 13 vorgesehen werden, so ist eine entsprechende Bauhöhe an der mit dem Pfeil 26 gekennzeichneten Stelle zwischen dem Einlaufgehäuse 12 des Drehrohrofens 1 und der Einmündung der die Abluft des Kühlers führenden Leitungen 14a, 14b vorzusehen.

Zur weiteren Erläuterung der Erfindung seien als Beispiel die Daten einer ausgeführten Anlage genannt , die eine Ofenleistung von 3500 tato, einen Wärmeverbrauch von 800 kcal/kg Klinker, eine Vorcalcinationsrate von 60% und einen Entsäuerungsgrad von 90% aufweist. Die an den einzelnen Stellen des zweisträngigen Vorwärmers vorhandenen Mengen und Temperaturen von Gas und Gut sind in Fig.1 eingetragen. Der vorhandene Vorwärmstrang 2 wird hierbei mit 42,5% und der neue Vorwärmstrang 3 mit 57,5% der Gas- und Gutmengen beaufschlagt.

- 1 -

**0076894**

Patentansprüche:

1. Verfahren zur Wärmebehandlung von feinkörnigem Gut, das zunächst in zwei Teilströmen in einer zweisträngigen Vorwärmzone mittels heißer Gase vorgewärmt, dann durch zusätzlichen Brennstoff weiter erhitzt, in einer Brennzone fertiggebrannt und in einer Kühlzone gekühlt wird, wobei die Vorwärmung des Gutes unter Verwendung von Abgas der Brennzone und Abluft der Kühlzone erfolgt,
dadurch gekennzeichnet,
daß das Abgas der Brennzone, die Abluft der Kühlzone und die vereinigten Teilströme des Gutes einer einzigen Erhitzungszone zugeführt werden, deren Abgas auf die beiden Stränge der Vorwärmzone aufgeteilt wird.

2. Verfahren nach Anspruch 1, dadurch gekennzeichnet, daß die Abluft der Kühlzone in zwei Teilströme aufgeteilt wird und das Gut beider Stränge der Vorwärmzone in diese Abluft der Kühlzone eingeführt wird, unmittelbar ehe sich diese Luft mit dem Abgas der Brennzone vereinigt.

3. Verfahren nach den Ansprüchen 1 und 2, dadurch gekennzeichnet, daß der zusätzliche Brennstoff gleichfalls in die Abluft der Kühlzone eingeführt wird, unmittelbar ehe sich diese Abluft mit dem Abgas der Brennzone vereinigt.

4. Verfahren nach den Ansprüchen 1 bis 3, wobei in jeder der beiden Vorwärmzonen der Teilstrom des Gutes und der Teilstrom des Gases wiederholt aufgeteilt, die Unterteilströme des Gutes in entsprechende Unterteilströme des Gases eingeführt und anschließend die Unterteilströme von Gut und Gas wieder vereinigt werden, dadurch gekennzeichnet, daß jeweils der eine Unterteilstrom des aus der zweituntersten Stufe der einen Vorwärmzone ausgetragenen Gutes mit einem Unterteilstrom des aus der zweituntersten Stufe der anderen Vorwärmzone ausgetragenen Gutes vereinigt wird, ehe dieses Gut in einen der beiden Teilströme der Abluft der Kühlzone eingeführt wird.

5. Vorrichtung zur Durchführung des Verfahrens nach den Ansprüchen 1 bis 4, enthaltend eine aus mehreren Zyklonstufen bestehende zweisträngige Vorwärmzone, einen Drehrohrofen als Brennzone, eine von der Ofenabgasleitung zwischen Drehrohrofen und Vorwärmzone gebildete Erhitzungszone sowie einen Kühler, dadurch gekennzeichnet, daß die die Abluft des Kühlers führende Leitung(14)in Form von zwei Teilleitungen(14a, 14b)in den untersten Bereich der Ofenabgasleitung(13)einmündet und daß die Ofenabgasleitung unterhalb dieser Einmündung dicht über dem Ofeneinlaufgehäuse(12)ihren engsten Querschnitt aufweist.

0076894

6. Vorrichtung nach Anspruch 5, dadurch gekennzeichnet, daß in den die Abluft des Kühlers führenden Teilleitungen(14a, 14b)dicht vor ihrer Einmündung in die Ofenabgasleitung(13) je ein Brenner(15, 15'),vorzugsweise unterhalb der Einmündung der Gutleitungen(24, 24'),angeordnet ist.

7. Vorrichtung nach Anspruch 5, dadurch gekennzeichnet, daß die in die Ofenabgasleitung(13)einmündenden, die Abluft des Kühlers führenden Teilleitungen(14a, 14b)im Bereich der Einmündung unter einem Winkel von 20 bis 50° gegenüber der Horizontalen geneigt sind.

8. Vorrichtung nach Anspruch 5, dadurch gekennzeichnet, daß die Ofenabgasleitung(13)von der Einmündung der Kühlerabluft-Teilleitungen(14a, 14b) zunächst unter einem Winkel von 20 bis 30° gegenüber der Vertikalen geneigt ist und dann vertikal verläuft.

9. Vorrichtung nach Anspruch 8, dadurch gekennzeichnet, daß die Zyklone(4, 5)der untersten Stufe des einen Stranges (2) der Vorwärmzone seitlich an den vertikal verlaufenden Teil der Ofenabgasleitung (13)angeschlossen sind, während die Zyklone(4', 5')der untersten Stufe des anderen Stranges (3)der Vorwärmzone etwas höher auf der Seite des Drehrohrofens (1)angeordnet sind.

0076894

10. Vorrichtung nach Anspruch 5, dadurch gekennzeichnet, daß die beiden Stränge (2, 3) der Vorwärmzone gesonderte Abgasgebläse (11, 11') enthalten.

11. Vorrichtung nach Anspruch 5, dadurch gekennzeichnet, daß die Ofenabgasleitung (13) im Bereich zwischen dem Einlaufgehäuse (12) des Drehrohrofens und der Einmündung der die Abluft des Kühlers führenden Teilleitungen (14a, 14b) mit einem By-pass-Anschluß versehen ist.

2

3

11

11'

0,6398 Nm³/kgKl
380°C

0,8657 Nm³/kgKl
380°C

0,3133 Nm³/kgKl
380°C
0,346 kgRM/kgKl

9   10

16    17

9'   10'

16'    17'

0,4239 Nm³/kgKl
380°C
0,469 kgRM/kgKl

360°C

18   19

360°C

0,3067 Nm³/kgKl
550°C

0,4152 Nm³/kgKl
550°C

<u>7</u>    <u>8</u>

<u>7'</u>    <u>8'</u>

530°C

530°C

20    21

0,3005 Nm³/kgKl
700°C

<u>6</u>

<u>6'</u>

0,4022 Nm³/kgKl
700°C

0,2943 Nm³/kgKl
850°C

0,3982 Nm³/kgKl
850°C

<u>4</u>    <u>5</u>

<u>4'</u>    <u>5'</u>

13a    13b

680°C
830°C

23   23'

22    22'   25'

680°C
830°C

1,385 Nm³/kgKl

14a   14

24

14b

15

24

15'

13

25'

25

0,451 Nm³/kgKl
1100°C

12

VC-Brennstoff Kohle
$H_u$ = 4300 kcal/kg Kohle

1

Ofenbrennstoff Kohle
$H_u$ = 6390 kcal/kg Kohle

FIG.2

FIG.3

## EUROPÄISCHER RECHERCHENBERICHT

Europäisches
Patentamt

0076894

Nummer der Anmeldung

EP 82 10 6435

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 04 B 7/44 |
| X | US-A-4 096 626 (BOYHONT) <br> * Figur 1; Spalte 3, Zeile 39 - Spalte 5, Zeile 20; Ansprüche 1,2 * | 1,10 | F 27 B 7/20 |
| | --- | | |
| X | EP-A-0 002 054 (POLYSIUS AG) <br><br> * Ansprüche 1-3,5-7,10 * | 1-3,5, 7,8 | |
| | --- | | |
| X | DE-A-2 851 887 (KRUPP POLYSIUS AG) <br> * Seite 12, Zeile 12 - Seite 13, Zeile 10; Figur 1; Anspruch 1 * | 1-3 | |
| | ----- | | |

|  |
|---|
| RECHERCHIERTE SACHGEBIETE (Int. Cl. 3) |
| C 04 B 7/44 <br> F 27 B 7/20 <br> C 04 B 7/00 <br> C 04 B 7/02 |

Der vorliegende Recherchenbericht wurde für alle Patentansprüche erstellt.

| Recherchenort <br> DEN HAAG | Abschlußdatum der Recherche <br> 18-01-1983 | Prüfer <br> STANGE R.L.H |
|---|---|---|